# EUROPEAN PATENT APPLICATION

(11) **EP 0 583 765 A1**
(43) Date of publication of application: **23.02.1994**
(21) Application number: 93113089.2
(22) Date of filing: 16.08.1993
(51) Int. Cl.: B29C 65/08, B65D 85/60

(54) **A method of producing containers, for example containers for food products such as confectionery products**

(30) Priority: 19.08.1992 CH 2583/92
(71) Applicant: SOREMARTEC S.A., 6700 Arlon-Schoppach (BE); Ferrero S.p.A., I-12051 Alba (Cuneo) (IT); Ferrero oHG mbH, D-60599 Frankfurt (DE)
(72) Inventor: Ferrero, Pietro, B-1412 Waterloo (BE)
(74) Representative: Bosotti, Luciano

(57) **Abstract**

Decorative elements (8) are applied to a hollow container, for example an egg-shaped container, (3, 4) by means of ultrasound welding (14), in order to give the container anthropomorhic or zoomorphic characteristics. The ultrasound welding operation is preferably carried out with the container already filled with respective products, such as chocolate eggs (7), by acting on only one side of the welding region by means of sonotrodes (14) the end portions (14a) of which have shapes such that they copy the shape of the welding region.

## Description

In general, the present invention addresses the problem of producing containers, for example, for food products such as confectionery products.

More specifically, the invention relates to a method according to the preamble to Claim 1, which can be applied in order to produce containers each comprising a container body or hollow casing, for example, an egg-shaped casing, to which additional elements are applied, for example, in order to give the container as a whole a zoomorphic or anthropomorhpic character. A container of this type is described, for example, in United States patent US-A-4 593 817.

The casing is usually made of at least partially transparent plastics material. Similarly, the elements applied thereto are also made of plastics material (rigid or flexible).

In order to apply the elements to the casing,it is possible, at least in principle, to use various solutions, such as, for example:
- mechanical connection, for example, by engagement or snap-engagement achieved by making use of the deformability characteristics of the elements concerned,
- sticking together by the application of adhesive material,
- sticking together by hot melting, by the local application of heat, and
- ultrasound welding.

Various considerations (such as, the need to avoid the presence of small connecting parts with consequent assembly difficulties, the need to avoid damaging the parts affected during connection, the need to maintain the absolute transparency of the parts which have this characteristic during assembly, the ease and speed of connection, the fact that some materials are difficult to stick) have caused the selection of ultrasound welding to be considered preferable by various manufacturers for some time.

Even this solution is not completely without problems or difficulties, however, owing to the need to achieve a quick and reliable production cycle, and to the need to avoid damaging the parts in question, even accidentally, as well as to the need to produce a really firm and practically inseparable connection of the parts constituting the final container.

The object of the present invention is therefore an improved ultrasound welding solution which, as regards the characteristics of the assembled product, has been found to ensure a high level of quality and a high production yield, eliminating all the problems inherent in known ultrasound welding techniques.

According to the present invention, this object is achieved by virtue of a method having the specific characteristics recited in Claim 1. Advantageous developments of the invention form the subjects of the subclaims.

The invention will now be described, purely by way of non-limiting example, with reference to the appended drawings, in which:
Figure 1 is a general perspective view of an ultrasound welding system operating according to the invention, and
Figure 2 is a sectional view taken on the line II-II of Figure 1, on an enlarged scale.

In the drawings, a system for automatically producing containers or packages for food products, for example, of the type described in United States patent US-A-4 593 817 already mentioned above, is generally indicated 1.

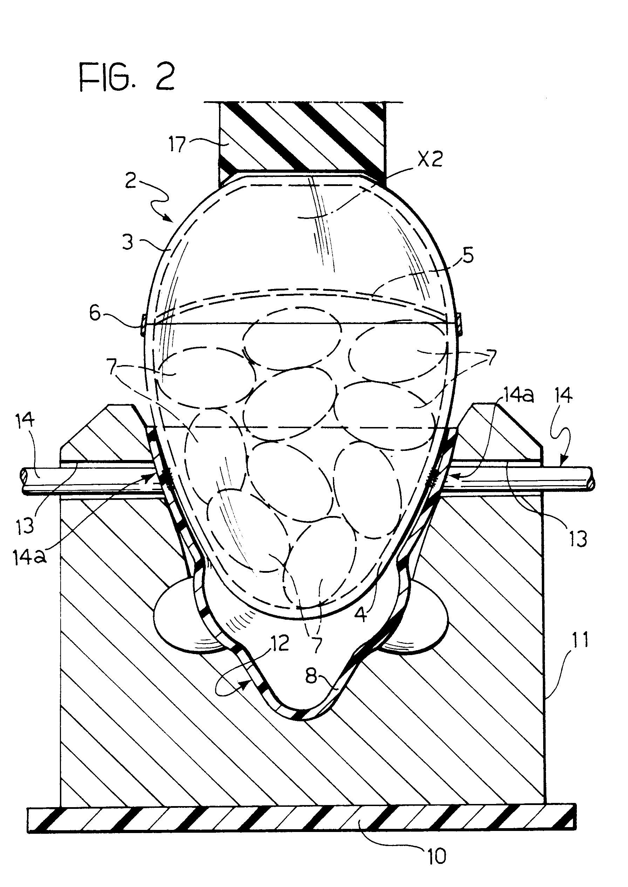

In summary, a container of this type, generally indicated 2, comprises (see, in particular, the enlarged view of Figure 2) a hollow, generally egg-shaped casing constituted by two shells 3 and 4 connected to each other along a substantially equatorial line with the interposition of a partition or separator disc 5 of generally concave shape. More precisely, the two shells 3 and 4 are interconnected (usually removably) by the frontal engagement of their mouth portions and are fixed in the closed position by means of an adhesive tape 6 applied to the equatorial connecting line.

The partition 5 has the function of dividing the interior of the egg-shaped casing into two portions which correspond - respectively - to the bottom shell 3, which is approximately hemispherical and is made of opaque plastics material (typically polypropylene) and to the other shell 4, which is in the form of an approximately parabolic dome and is made of transparent plastics material (such as, for example, polystyrene or styrolux). Naturally, in view of the generally ovoid shape of the casing 2, the shell or dome 4 (as well as the internal portion of the space in the casing defined thereby) has generally larger dimensions than the shell 3. The shell 4 contains a certain number of food products such as, for example, chocolate eggs 7.

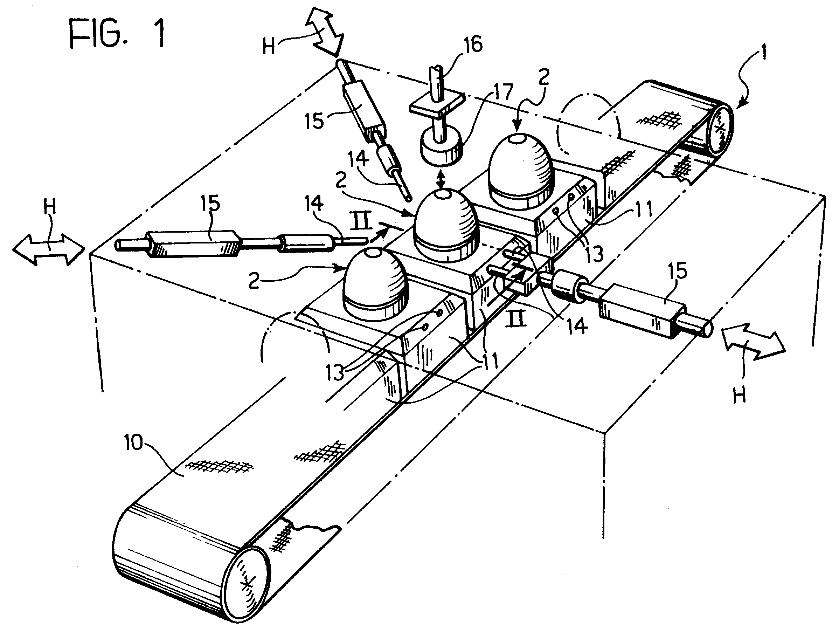

An important characteristic of the system of Figure 1 is that it does not preferably operate on empty containers 2 but on full containers, that is, on actual packages which already contain the products 7. In fact, tests carried out by the Applicant have shown that, in a wholly unexpected manner, instead of having an adverse effect, the presence of the products 7 (particularly in the form of fairly compact masses such as solid or filled chocolate eggs 7) assists the ultrasound welding process which will be referred to further below.

The method is intended to enable one or more shaped elements 8 to be applied to the casing constituted by the two shells 3 and 4 in order to give the container 2 as a whole an anthropomorphic or zoomorphic appearance, for example, the appearance of a small animal. In this connection, reference may again be made to the United States patent US-A-4 593 817 already mentioned several times above.

For example, one of the elements 8 may be constituted by a shaped element of plastics material which defines the muzzle of the small animal whilst another element defines the animal's paws (front or rear).

In general, if the elements 8 are rigid, they are made of a plastics material such as impact-resistant polystyrene. If there are flexible and soft parts (usually snap-engaged onto rigid elements) (for example, the animal's ears, etc.) a soft plastics material such as, for example, polyvinyl chloride with a degree of hardness of the order of 70 Shore A can be used.

As is shown best in Figure 1, the device 1 is constituted essentially by a conveyor (for example, a motor-driven belt conveyor) on which a flow of shaped elements 11 (referred to below, for brevity, as "moulds" - although this term is not entirely correct in the present context) advance (according to widely known criteria which do not need to be described specifically herein), each of the elements 11 having (see the sectioned view of Figure 2) an upwardly-facing cavity 12 with a generally flared or generally upwardly open shape so that it can house the element or elements 8 which in turn are intended to house the egg-shaped casing, specifically, the dome 4. Naturally, if the elements were to be applied to the shell 3, the relative arrangement of the egg-shaped casing would be inverted in comparison with that shown in Figure 2.

The elements 8 and the egg-shaped casings 3, 4 can easily be inserted in the moulds 11 either manually or, according to a preferred solution, automatically : for example, by means of two loaders disposed in cascade (not shown), of which the first inserts in the cavity 12 the element or elements 8 to be applied to the casing and the second inserts the egg-shaped casing 3, 4 in the required orientation on top of and within the elements 8.

The final arrangement achieved is therefore that shown in the sectional view of Figure 2.

Near the mouth portion of the cavity 12, the mould 11 has one or more holes 13 which extend approximately horizontally and in about radial directions relative to the principal axis X2 of the package 2, which is usually oriented vertically.

Each of the holes 13 is formed at a height such that its radially inner end (relative to the package 2) faces a region of the element 8 which in turn faces a region of the egg-shaped casing (in the embodiment illustrated, of the dome 4) in which the element 8 is to be welded to the egg-shaped casing: this region can thus be called the "welding region".

Each of the holes 13 (which may either extend entirely through the mould 11 or may possibly be of the open-topped type if they are situated near the mouth part of the mould 11) constitutes a radial entry route for a respective sonotrode 14 of an ultrasound welding system.

In the embodiment illustrated, it is assumed that ultrasound welding is to be carried out in four regions of the dome 4 : for example, in two first regions in order to fix to the dome 4 an element 8 for defining the muzzle of an animal, and in another two regions in order to fix to the dome 4 further elements 8 (not explicitly visible in the drawings) defining the animal's front paws: naturally this is an example, since there are certainly countless variants.

The sonotrodes 14 (in the embodiment illustrated in Figure 1 there are two individual sonotrodes spaced apart angularly by about 90^{o} and a double sonotrode with a generally fork-shaped configuration - which , however, is also certainly not a limiting selection) are associated with respective excitation units 15 of known type for applying ultrasound vibration wavefronts of predetermined frequency to the sonotrodes 14 : in this connection, with reference to the materials indicated above, the selection of a working frequency of about 40 kHz has been found particularly advantageous.

The various sonotrodes 14 (as well as their excitation units 15) are mounted on movement units (for example pneumatic jacks) which enable them to move (according to the double arrows H of Figure 1) respectively radially towards and away from the principal axis X2 of the package being processed at the time in question.

The approach movement causes each sonotrode to enter the respective hole 13 in the mould 11 containing the package being processed at the time in question. This is in order to bring the tip 14a of the sonotrode into contact with the element 8 in the region in which the welding to the dome 4 of the package is to be carried out. After a period of contact with the parts to be connected of, for example, 5-6 tenths of a second with the excitation units 15 activated, the ultrasound vibration field applied is such as to bring about a firm local connection of the material constituting the element 8 to the wall of the dome 4. This occurs even though the sonotrodes act on only one side of the welding region (the outer side, with respect to the container) and hence without the specific provision of abutment elements (anvils) on the opposite side, that is, within the casing 3, 4.

Upon completion of the welding, the sonotrodes 14 can be moved away from the mould 11 again and removed completely from the corresponding holes 13 to enable (in known manner) the conveyor 10 which supports the moulds 11 to be advanced by one step, consequently exposing a new package 2 housed in a respective mould 11 in the ultrasound welding station.

Naturally, the package 1 which has already been welded can be removed from the mould 11 manually or, preferably, automatically: the element or elements 8 welded thereto are in fact firmly connected to the casing 3, 4.

The ultrasound welding station preferably also includes a restraining device 16 which reciprocates vertically between a raised position (shown explicitly in Figure 1) and a lowered position (see the sectional view of Figure 2 - in which it is shown by a broken line) in which a yielding buffer 17 on the bottom of the device 16 presses against the casing 2 (in the embodiment illustrated, against the shell 3) so as to stabilise the package in its position, in which it is inserted in the mould 11 and securely in close contact with the element or elements 8 to be ultrasound welded.

It has been found that an important factor for putting the invention into practice is the use, for at least some of the sonotrodes 14a, of tips which, instead of being generally conical or pointed in shape, have generally flat end faces with shapes such that they copy precisely the shapes of the corresponding welding regions. Thus, in the embodiment shown in Figure 2, there are two sonotrodes 14 having end faces 14a which are shaped generally according to a slant cut and which mate quite precisely with the tapered shapes of the parts of the element 8 and of the dome 4 on which the tips of the sonotrodes are intended to act.

The use of titanium has been found preferable to the use of aluminium for producing the sonotrodes 14. The selection of an overall sonotrode length of the order of 65 or 130 mm has been found advantageous; this is also advantageous with regard to the fact that an almost constant sonotrode length can be adapted to different operating conditions by varying the sections of the sonotrodes. In the working conditions described above, it has been found that elastic ultrasound waves with a wavelength of the order of 10-15 micrometers (typically abut 13 micrometers) are present in the material being ultrasound welded.

Naturally, the principle of the invention remaining the same, the details of construction and forms of embodiment may be varied widely with respect to those described and illustrated, without thereby departing from the scope of the present invention.

## Claims

1. A method of applying auxiliary elements (8) to a generally hollow container (3, 4) for housing articles (7), by means of ultrasound welding in at least one welding region, characterized in that the ultrasound is applied by sonotrode means (14) acting on only one side of the at least one welding region.

2. A method according to Claim 1, characterized in that the ultrasound welding is carried out with the hollow container (3, 4) filled with articles (7).

3. A method according to Claim 2, characterized in that the articles (7) are of generally compact structure.

4. A method according to Claim 3, characterized in that the articles (7) are constituted by solid or filled chocolate eggs.

5. A method according to any one of the preceding claims, characterized in that at least some of the sonotrode means (14) have end surfaces (14a) which are intended to be applied in contact with the at least one welding region and the shapes of which copy the shape of the at least one welding region, at least locally.

6. A method according to any one of the preceding claims, characterized in that the ultrasound welding is carried out at a frequency of the order of 40kHz.

7. A method according to any one of the preceding claims, characterized in that the welding is achieved by applying (14) ultrasound to the at least one welding region for a period of the order of 0.5-0.6 seconds.

8. A method according to any one of the preceding claims, characterized in that the sonotrode means (14) are made of a material selected from aluminium and titanium.

9. A method according to any one of the preceding claims 1 to 7, characterized in that the sonotrode means (14) are made of titanium.

10. A method according to any one of the preceding claims, characterized in that the hollow casing (3, 4) and the auxiliary elements (8) are made of materials such that the ultrasound wave propagated in the materials during the welding has a wavelength of the order of 10-15 microns.

11. A method according to any one of the preceding Claims 1 to 9, characterized in that the hollow casing (3, 4) and the auxiliary elements (8) are made of materials such that the ultrasound wave propagated in the material during the welding has a wavelength substantially equal to 13 microns.

12. A method according to any one of the preceding claims, characterized in that it comprises the step of providing mould means (11) having a main cavity (12) for housing the auxiliary elements (8) with at least part (4) of the hollow container housed within the auxiliary elements (8).

13. A method according to Claim 12, characterized in that it comprises the step of providing at least one generally radial hole (13) in the mould means (11) for the entry of the sonotrode means (14) to contact the at least one welding region.

14. A method according to Claim 12 or Claim 13, characterized in that the main cavity (12) is generally flared.

15. A method according to any one of Claims 12 to 14, characterized in that the mould means (11) are kept oriented with the main cavity (12) facing generally upwards during the ultrasound welding operation.

16. A method according to any one of Claims 12 to 15, characterized in that it comprises the step of forcing (16, 17) the container (3, 4) and the auxiliary elements (8) towards the interior of the main cavity (12) of the mould means (11) by pressure during the ultrasound welding operation.

17. A method according to any one of the preceding claims, characterized in that the container (3, 4) is generally egg-shaped.

18. A method according to any one of the preceding claims, characterized in that at least the portion of the container (3, 4) which is intended to house the auxiliary elements (8) is made of a material selected from the group constituted by polystyrene and styrolux.

19. A method according to any one of the preceding Claims 1 to 7, characterized in that at least the portion of the container (3, 4) which is intended to house the auxiliary elements (8) is made of styrolux.

20. A method according to any one of the preceding claims, characterized in that at least the portions of the auxiliary elements (8) which are intended to be ultrasound welded to the container (3, 4) are made of a plastics material such as polystyrene.
